# FASCICULE DE BREVET EUROPEEN

(11) **EP 1 192 888 B1**
(45) Date de publication et mention de la délivrance du brevet: **04.05.2005**
(21) Numéro de dépôt: 01402529.0
(22) Date de dépôt: 01.10.2001
(51) Int. Cl.: A47J 27/04

(54) **Réservoir d'eau amovible, notamment pour un four de cuisson à la vapeur**
Herausnehmbare Wasserbehälter, insbesondere für ein Dampfgargerät
Removable water reservoir, in particular for a steam cooking device

(30) Priorité: 02.10.2000 FR 0012517
(43) Date de publication de la demande: 03.04.2002
(73) Titulaire: Brandt Industries, 92500 Rueil Malmaison (FR)
(72) Inventeur: Papet, Thierry, 45770 Saran (FR); Baratin, Nicole, 45470 Loury (FR)
(74) Mandataire: Santarelli

(56) Documents cités:
- EP-A- 0 276 458
- EP-A- 0 767 268
- US-A- 4 610 145
- US-A- 5 370 040

## Description

La présente invention concerne un réservoir d'eau amovible.

Elle concerne également un appareil électro-ménager comprenant un tel réservoir d'eau, et notamment un four de cuisson à la vapeur.

Un réservoir d'eau pour appareil électro-ménager est prévu généralement pour être connecté à un circuit d'alimentation en eau de l'appareil.

Dans un four de cuisson à la vapeur, également appelé four vapeur, l'eau est pompée à partir du réservoir pour alimenter progressivement un générateur de vapeur placé par exemple directement dans l'enceinte de cuisson du four.

Afin de faciliter le remplissage en eau du réservoir, ce dernier est conçu de telle sorte qu'il peut être monté de manière amovible dans l'appareil électro-ménager.

Ce dernier comporte ainsi un logement ménagé dans la structure de l'appareil, et adapté à recevoir le réservoir.

Ce réservoir comporte sur une face d'extrémité une poignée venant en saillie du logement de l'appareil, permettant à l'utilisateur de manipuler le réservoir, et notamment de l'extraire de son logement.

Des moyens de connexion, permettant de réaliser la connexion du réservoir au circuit d'alimentation en eau, sont disposés sur l'autre face d'extrémité du réservoir.

Ces moyens de connexion comprennent par exemple un embout, formant une saillie sur la face d'extrémité du réservoir.

Un clapet permet d'obturer ou non un orifice de sortie de l'embout et ce dernier est adapté à être relié au circuit d'alimentation en eau.

On connaît un tel réservoir décrit dans le document US 5 370 040, qui présente dans son fond un décrochement important pour loger les moyens de connexion.

Cependant, il est utile lors de la manipulation d'un tel réservoir d'eau, et notamment lors de son remplissage, de pouvoir poser celui-ci de manière stable, par exemple sur un plan de travail.

La présente invention a pour but de proposer un réservoir d'eau amovible posable, n'impliquant pas de contraintes importantes en terme de forme du réservoir.

A cet effet, la présente invention concerne un réservoir d'eau amovible comprenant un corps formant réservoir ayant une première face d'extrémité comprenant une poignée de manipulation du réservoir, et une seconde face d'extrémité comprenant des moyens de connexion du réservoir à un circuit d'alimentation en eau.

Selon l'invention, la seconde face d'extrémité comprend une surface sensiblement plane formant une surface de repos pour poser ledit réservoir et un décrochement réalisé sur une faible portion de surface de ladite seconde face d'extrémité et adapté à loger les moyens de connexion formant saillie de la seconde face d'extrémité, et le corps de réservoir comprend un orifice de remplissage disposé à proximité de ladite première face d'extrémité du réservoir.

Grâce à ce positionnement en retrait des moyens de connexion, on peut poser facilement le réservoir d'eau sur sa face d'extrémité plane.

Cette disposition permet de conserver une grande liberté de forme pour le corps du réservoir.

Ce dernier peut ainsi avoir une forme de révolution ou une forme elliptique.

En outre, l'orifice de remplissage est éloigné le plus possible de la seconde face d'extrémité sur laquelle peut reposer le réservoir, de manière à ne diminuer que faiblement le volume utile du corps du réservoir.

Selon une caractéristique préférée de l'invention, la surface sensiblement plane est perpendiculaire à un axe longitudinal du corps formant réservoir.

Le réservoir peut ainsi être posé de manière parfaitement stable sur sa face d'extrémité plane.

Le volume utile du réservoir d'eau n'est en outre pas diminué dès lors que l'axe longitudinal du corps du réservoir n'est pas incliné par rapport à la verticale lorsque le réservoir est posé sur un plan horizontal.

Selon un autre aspect de l'invention, elle concerne un appareil électro-ménager comprenant en tant qu'accessoire un réservoir d'eau amovible conforme à l'invention.

Dans un mode de réalisation pratique de l'invention, cet appareil électro-ménager est un four de cuisson à vapeur, le réservoir d'eau amovible étant adapté à être connecté à un circuit d'alimentation en eau d'un générateur de vapeur.

D'autres particularités et avantages de l'invention apparaîtront encore dans la description ci-après.

Aux dessins annexés, donnés à titre d'exemples non limitatifs :
- la figure 1 est une vue en perspective éclatée d'un réservoir d'eau conforme à un mode de réalisation de l'invention et de son logement dans un appareil ;
- la figure 2 est une vue en coupe transversale du réservoir d'eau de la figure 1 en place dans son logement ;
- la figure 3 est une vue en perspective du réservoir d'eau de la figure 2, posé seul sur un plan de travail ; et
- la figure 4 est une vue en perspective d'un four vapeur équipé du réservoir de la figure 2.

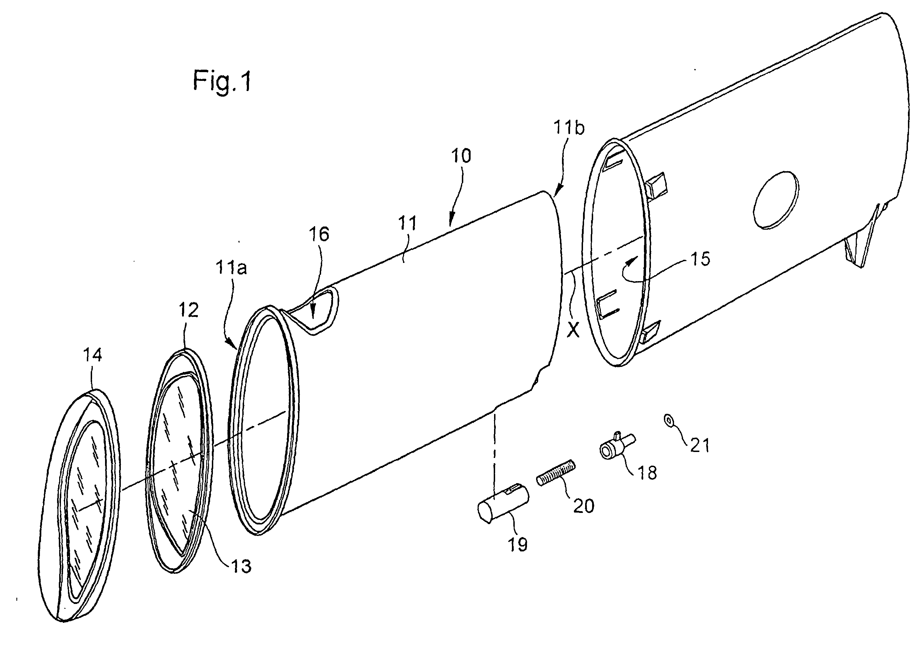

On va décrire tout d'abord en référence à la figure 1, un réservoir d'eau amovible conforme à un mode de réalisation de l'invention.

Ce réservoir 10 comprend un corps 11 formant le réservoir proprement dit.

Ici, ce corps de réservoir 11 s'étend suivant un axe longitudinal X et possède une section transversale de forme sensiblement elliptique, ou dite en forme de goutte d'eau.

Une première face d'extrémité 11a est obturée par un couvercle 12.

Ce couvercle 12 peut être fixé par clipsage dans l'extrémité du corps du réservoir 11.

De manière connue, ce couvercle 12 peut comporter une portion de surface translucide 13 permettant de visualiser le niveau d'eau à l'intérieur du réservoir 10.

Une poignée 14 est en outre fixée sur cette première face d'extrémité 11a du réservoir.

Cette poignée de manipulation permet de tenir le réservoir 10 et facilite sa manipulation.

En effet, ce réservoir 10 est adapté à s'insérer dans un logement 15 de forme interne complémentaire de la forme externe du corps de réservoir 11.

En position dans ce logement, seule la face d'extrémité 11a, pourvue de la poignée 14 et de la portion de surface translucide 13 est apparente. La poignée 14 permet d'extraire le réservoir 10 de son logement 15.

Le corps de réservoir 11 comporte en outre un orifice de remplissage 16 disposé à proximité de cette première face d'extrémité 11a du réservoir 10.

A l'autre extrémité 11b du réservoir sont prévus des moyens de connexion de ce réservoir à un circuit d'alimentation en eau.

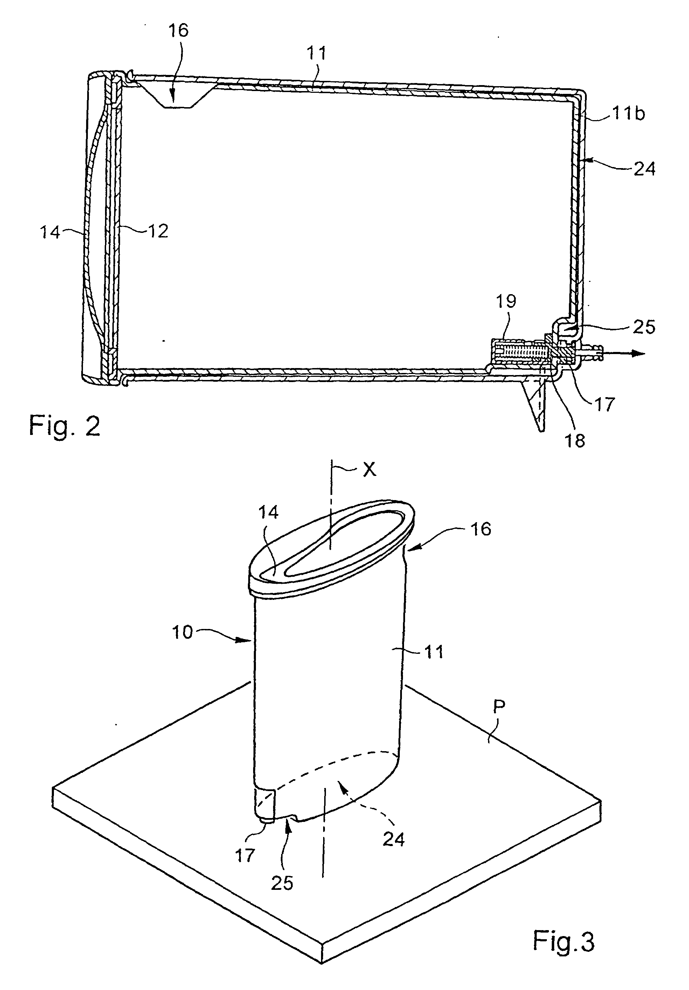

Comme mieux illustré à la figure 2, ces moyens de connexion comprennent un embout 17 formant une saillie sur la face d'extrémité 11b du réservoir 10.

Dans cet embout 17 s'étend une tige de clapet 18, le clapet lui-même étant logé à l'intérieur d'un support de clapet 19 disposé dans le corps du réservoir 10.

La tige de clapet 18 est logée dans le support de clapet 19, un ressort 20 étant maintenu entre le fond du support de clapet 19 et la tige de clapet 18. Un joint d'étanchéité 21 équipe également la tige de clapet 18 pour éviter toute fuite d'eau lorsque le réservoir 10 n'est pas dans son logement 15.

Comme bien illustré à la figure 2, cette seconde face d'extrémité 11 b comprend une surface 24 sensiblement plane.

Selon l'invention, un décrochement 25 est ménagé dans cette surface plane 24 de manière à loger les moyens de connexion, et notamment l'embout 17 formant une saillie.

Grâce à cette surface sensiblement plane 24, et comme illustré à la figure 3, le réservoir 10 peut être posé de manière stable sur cette seconde face d'extrémité 11b.

Grâce au décrochement 25 dans lequel est logé l'embout 17 des moyens de connexion, aucun élément en saillie ne dépasse de cette surface plane 24, pouvant rendre instable la position du réservoir.

Ce décrochement 25 est situé de préférence à la périphérie de la seconde face d'extrémité du réservoir 11 b, de telle sorte que la surface plane 24 forme une surface de repos continue, d'un seul tenant, pour poser le réservoir.

De plus, ce décrochement 25 est réalisé sur une faible portion de surface de la face d'extrémité 11 b du réservoir 10.

Comme illustré à la figure 3, lorsque le réservoir 10 repose sur sa seconde face d'extrémité 11b, l'axe longitudinal X du réservoir 10 est sensiblement vertical ce qui procure une grande stabilité à ce réservoir.

En outre, la position de l'orifice de remplissage 16 à proximité de la première face d'extrémité 11 a permet de conserver un volume utile important à l'intérieur du corps de réservoir 11.

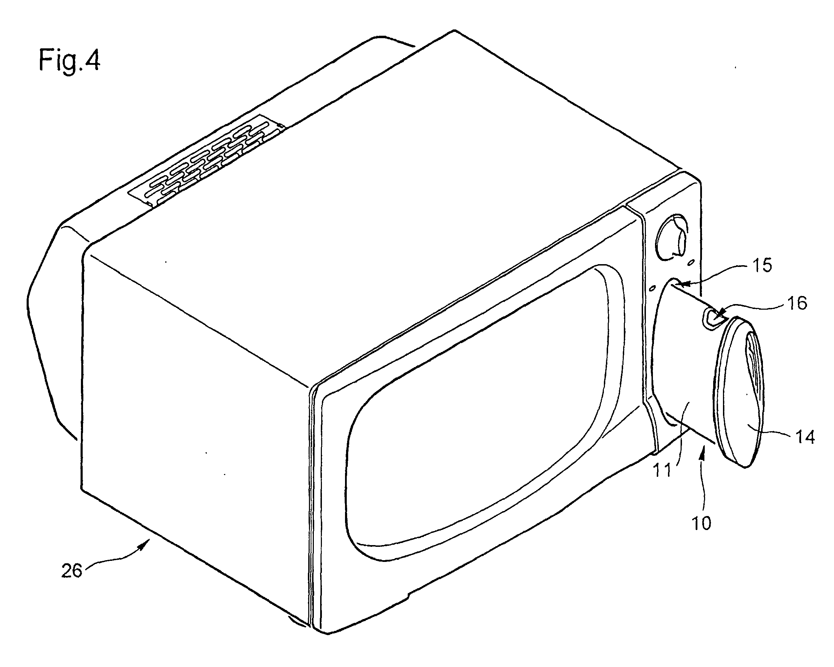

Comme bien illustré à la figure 4, lorsque le réservoir 10 est en place dans son logement 15 d'un four vapeur 26, les moyens de connexion 17 et le décrochement 25 sont situés en partie basse du réservoir 10.

Au contraire, l'orifice de remplissage 16 est situé en partie haute du réservoir.

Un tel réservoir d'eau est particulièrement bien adapté à équiper un four de cuisson à la vapeur 26, dans lequel une grande quantité d'eau est utilisée par un générateur de vapeur pour la cuisson d'aliments dans une enceinte de cuisson.

Lorsque le réservoir 10 est mis en place dans son logement 15 du four vapeur 26, la tige de clapet 18 est repoussée dans le support de clapet 19 contre la force de rappel élastique du ressort 20, de manière à autoriser le passage de l'eau du réservoir 10 vers le générateur de vapeur.

Dès le début de l'extraction du réservoir 10 hors de son logement 15, la tige de clapet 18 est rappelée par le ressort 20 dans une position permettant d'obturation de la sortie d'eau du réservoir 10.

Bien entendu, de nombreuses modifications peuvent être apportées à l'exemple de réalisation décrit précédemment sans sortir du cadre de l'invention.

Ainsi, le corps de réservoir 11 peut avoir des formes très variées, et notamment une forme cylindrique.

Tout type de poignée 14 pourrait également équiper la première face d'extrémité 11a du réservoir.

## Revendications

1. Réservoir d'eau amovible comprenant un corps formant réservoir (11), ayant une première face d'extrémité (11a) comprenant une poignée de manipulation (14) du réservoir (10) et une seconde face d'extrémité (11b) comprenant des moyens de connexion (17) du réservoir (10) à un circuit d'alimentation en eau, **caractérisé en ce que** la seconde face d'extrémité (11b) comprend une surface sensiblement plane (24) formant une surface de repos pour poser ledit réservoir et un décrochement (25) réalisé sur une faible portion de surface de ladite seconde face d'extrémité (11b) et adapté à loger les moyens de connexion (17) formant saillie de la seconde face d'extrémité (11b) et **en ce que** le corps de réservoir (11) comprend un orifice de remplissage (16) disposé à proximité de ladite première face d'extrémité (11a) du réservoir (10).

2. Réservoir d'eau amovible conforme à la revendication 1, **caractérisé en ce que** la surface sensiblement plane (24) est perpendiculaire à un axe longitudinal (X) du corps formant réservoir (11).

3. Réservoir d'eau amovible conforme à l'une des revendications 1 ou 2, **caractérisé en ce que** le décrochement (25) est situé à la périphérie de la seconde face d'extrémité (11b) du réservoir (10).

4. Appareil électro-ménager **caractérisé en ce qu'**il comprend en tant qu'accessoire un réservoir d'eau amovible conforme à l'une des revendications 1 à 3.

5. Appareil électro-ménager conforme à la revendication 4, tel qu'un four de cuisson à vapeur (26), **caractérisé en ce que** le réservoir d'eau amovible (10) est adapté à être connecté à un circuit d'alimentation en eau d'un générateur de vapeur.

## Patentansprüche

1. Herausnehmbarer Wasserbehälter mit einem den Behälter bildenden Körper (11), der eine erste Stirnfläche (11a) mit einem Bediengriff (14) des Behälters (10) und eine zweite Stirnfläche (11b) mit Mitteln (17) zum Anschließen des Behälters (10) an einen Wasserversorgungskreis hat, **dadurch gekennzeichnet, daß** die zweite Stirnfläche (11b) eine im wesentlichen ebene Fläche (24), die eine Auflagefläche zum Hinstellen des Behälters bildet, und einen zurückspringenden Abschnitt (25) aufweist, der an einem kleinen Teil der Oberfläche der zweiten Stirnfläche (11b) ausgebildet ist und die von der zweiten Stirnfläche (11b) hervorstehenden Anschlußmittel (17) aufnehmen kann, und daß der Behälterkörper (11) eine Einfüllöffnung (16) aufweist, die in der Nähe der ersten Stirnfläche (11a) des Behälters (10) angeordnet ist.

2. Herausnehmbarer Wasserbehälter nach Anspruch 1, **dadurch gekennzeichnet, daß** die im wesentlichen ebene Fläche (24) senkrecht zu einer Längsachse (X) des den Behälter bildenden Körpers (11) ist.

3. Herausnehmbarer Wasserbehälter nach einem der Ansprüche 1 oder 2, **dadurch gekennzeichnet, daß** der zurückspringende Abschnitt (25) am Umfang der zweiten Stirnfläche (11b) des Behälters (10) liegt.

4. Elektrisches Haushaltsgerät, **dadurch gekennzeichnet, daß** es als Zubehör einen herausnehmbaren Wasserbehälter nach einem der Ansprüche 1 bis 3 umfaßt.

5. Elektrisches Haushaltsgerät nach Anspruch 4, wie ein Dampfgarofen (26), **dadurch gekennzeichnet, daß** der herausnehmbare Wasserbehälter (10) an einen Wasserversorgungskreis eines Dampferzeugers angeschlossen werden kann.

## Claims

1. A removable water reservoir comprising a body defining a reservoir (11) and having a first end face (11a), which includes a handle (14) for manipulating the reservoir (10), and a second end face (11b) having means (17) for connection of the reservoir (10) to a water supply circuit, **characterised in that** the second end face (11b) has a substantially flat surface (24) which constitutes a rest surface for placing of the said reservoir, and a recess (25) formed on a small portion of the surface of the said second end face (11b) and adapted to accommodate the connecting means (17), which project from the second end face (11b), and **in that** the reservoir body (11) has a filling hole (16) disposed close to the said first end face (11a) of the reservoir (10).

2. A removable water reservoir according to Claim 1, **characterised in that** the substantially flat surface (24) is at right angles to a longitudinal axis (X) of the body defining the reservoir (11).

3. A removable water reservoir according to Claim 1 or Claim 2, **characterised in that** the recess (25) is situated at the periphery of the second end face (11b) of the reservoir (10).

4. A domestic electrical appliance, **characterised in that** it includes, as an accessory, a removable water reservoir according to one of Claims 1 to 3.

5. A domestic electrical appliance according to Claim 4, such as a steam cooking oven (26), **characterised in that** the removable water reservoir (10) is adapted to be connected to a water supply circuit of a vapour generator.
